# EUROPEAN PATENT APPLICATION

(11) **EP 1 133 103 A1**
(43) Date of publication of application: **12.09.2001**
(21) Application number: 00962994.0
(22) Date of filing: 29.09.2000
(51) Int. Cl.: H04L 12/26, H04L 12/46

(54) **MAINTENANCE TEST SYSTEM BETWEEN LAN CONNECTION DEVICES AND LAN CONNECTION DEVICE**

(30) Priority: 29.09.1999 JP 27700299
(71) Applicant: HITACHI TELECOM TECHNOLOGIES, LTD., Koriyama-shi, Fukushima-ken 963-8826 (JP)
(72) Inventor: YOSHIDA, Takahiro, Hitachi Telecom Techn., Ltd, Koriyama-shi, Fukushima 963-8826 (JP); GOKAN, Shin-ichi, Hitachi Telecom Techn., Ltd, Koriyama-shi, Fukushima 963-8826 (JP); SATO, Tsuyoshi, Hitachi Telecom Techn., Ltd, Koriyama-shi, Fukushima 963-8826 (JP)
(74) Representative: Grünecker, Kinkeldey, Stockmair & Schwanhäusser Anwaltssozietät
(86) International application number: JP0006789
(87) International publication number: WO0124449

(57) **Abstract**

A LAN connecting device connectable to a LAN and connected to its opposite party device through lines 202 and 203 each using an optical fiber as a physical medium is provided with a communication data control portion 208 for performing an ordinary LAN communication between terminals of a physical communication or between terminals of a logical communication, a maintenance data control portion 218 for performing a test of communication, and an optical multiplexer 211 and an optical demultiplexer 213 for multiplexing and demultiplexing the input/output wavelengths of the communication data control portion 208 and the maintenance data control portion 218, and optionally performs a test of communication by means of the maintenance data control portion 218, and therefore, even such a LAN connecting device as a bridge, switch, repeater or the like not having a protocol up to the OSI layer 3 makes it possible to perform a test of a path between communication terminals, between repeating devices or between a communication terminal and a repeating device, and perform an operation test on these communication terminals and repeating devices.

## Description

### TECHNICAL FIELD

The present invention relates to a system for performing a maintenance test between LAN connecting devices and the same LAN connecting device, said system and device making it easy to perform a test on a path between communication terminal devices connectable to a LAN (Local Area Network), between repeating devices or between a communication terminal device and a repeating device, and perform an operation test on such a communication terminal device or a repeating device, making it possible to perform a test communication with its opposite party device at a signal level or a code level without requiring a function of an upper level than the OSI (Open Systems Interconnection) layer 3 protocol, and thereby making it easy to perform an installation test and a path test.

### BACKGROUND ART

Up to now, in confirmation of a communication path in a LAN, the path has been confirmed using an Echo command (alias "Ping") of ICMP (Internet Control Message Protocol) existing in the layer 3 protocol.

Therefore, a personal computer, a router or the like being a communication device having a protocol up to the OSI layer 3 can utilize an Echo command, and can perform a path test between communication terminal devices, between repeating devices or between a communication terminal device and a repeating device, and a connection test between communication terminal devices or repeating devices which devices can be connected to a LAN.

However, since such a LAN connecting device as a bridge, switch, repeater or the like not having a protocol up to the OSI layer 3 cannot use such an Echo command, it can confirm a function up to an electric or optical link of the OSI layer 1 but cannot confirm its device operation.

A conventional LAN often connects remote sub-networks to each other through a WAN (wide area network), and since a recent LAN is made more high-speed and long-distance, it adopts a system using a circuit connection of 100 Base-FX utilizing, for example, an optical cable circuit prescribed in IEEE 802.3u in a LAN protocol instead of a system using a circuit connection by an existing WAN protocol.

Such a circuit connection system using 100 Base-FX solves a bottleneck of a transit portion caused by passing through a WAN in a conventional system, but can ensure only up to a router the connection operations provided to a user by a network management operator utilizing a LAN protocol.

That is to say, a repeating device having a bridge or repeater function, said device dividing no sub-network, is enough from a viewpoint of a LAN technique, but since such a repeating device does not have a function of performing a connection test between devices, such a repeating device not having a protocol up to the layer 3 cannot be used as a separation point for ensuring the operation of communication.

Therefore, an object of the present invention is to provide a system and a LAN connecting device for performing a maintenance test between LAN connecting devices, said system and device making it possible to perform a test on a path between communication terminal devices, between repeating devices or between a communication terminal device and a repeating device, and perform an operation test on such a communication terminal device or a repeating device at a signal level or a code level capable of recognizing up to the OSI layer 2 even for LAN connecting devices such as a bridge, switch, repeater and the like not having a protocol up to layer 3, and making it possible to perform a test on a path between communication terminal devices, between repeating devices or between a communication terminal device and a repeating device, and perform an operation test for communication on such a communication terminal device or a repeating device, said devices being connectable to a LAN.

### DISCLOSURE OF THE INVENTION

In order to solve the above-mentioned problems, the present invention provides a system for performing maintenance between LAN connecting devices in which a plurality of LAN connecting devices connectable to a LAN are connected to each other through a circuit using an optical fiber as a physical medium, said system comprising a test means which separates from each other the input/output wavelength of a communication means for performing an ordinary LAN communication between terminals of a physical communication or between terminals of a logical communication and the input/output wavelength of a test communication means for performing a test of communication, and said system performing a maintenance test on a path between said LAN connecting devices.

According to a system for performing a maintenance test between LAN connecting devices of the present invention, therefore, even a LAN connecting device not having a protocol up to layer 3 can perform a maintenance test on a path between LAN connecting devices by separating from each other the input/output wavelength of an ordinary LAN communication and the input/output wavelength of a test communication and using the wavelength of the test communication.

And the present invention provides a system for performing maintenance between LAN connecting devices in which a plurality of LAN connecting devices connectable to a LAN are connected to each other through a circuit using an optical fiber as a physical medium, said system comprising the steps of; separating from each other the input/output wavelength of a communication means for performing an ordinary LAN communication between terminals of a physical communication or between terminals of a logical communication and the input/output wavelength of an alarm communication means for notifying a communication state, and transferring alarm information between said LAN connecting devices by means of said alarm communication means.

According to a system for performing a maintenance test between LAN connecting devices of the present invention, therefore, even a LAN connecting device not having a protocol up to layer 3 can separate from each other the input/output wavelength of an ordinary LAN communication and the input/output wavelength of an alarm information transfer for notifying a communication state and use the wavelength of an alarm communication, and thereby transfer alarm information for notifying a communication state between LAN connecting devices.

And the present invention provides a system for performing maintenance between LAN connecting devices in which a plurality of LAN connecting devices connectable to a LAN are connected to each other through a circuit using an optical fiber as a physical medium, said system separating from each other the input/output wavelength of a communication means for performing an ordinary LAN communication between terminals of a physical communication or between terminals of a logical communication and the input/output wavelength of a status communication means for notifying a device status, and delivering, when one side LAN connecting device comes into a power-off state, a signal indicating the power-off state to the other side LAN connecting device by means of said status communication means of the said LAN connecting device being in the power-off state.

According to a system for performing a maintenance test between LAN connecting devices of the present invention, therefore, even a LAN connecting device not having a protocol up to layer 3 can separate from each other the input/output wavelength of an ordinary LAN communication and the input/output wavelength of a power-off status communication and use the wavelength of the power-off status communication, and thereby deliver a signal indicating the power-off state of one LAN connecting device to the other LAN connecting device.

And the present invention provides a system for maintenance between LAN connecting devices in which a plurality of LAN connecting devices connectable to a LAN are connected to each other through a circuit, said system comprising a means for recognizing, by using a test communication signal being in a different form from an ordinary communication code, said test communication code separately from an ordinary LAN communication and separating an ordinary communication and a test communication from each other on the basis of code data, and thereby said system testing a path between said LAN connecting devices.

According to a system for performing a maintenance test between LAN connecting devices of the present invention, therefore, even a LAN connecting device not having a protocol up to layer 3 can separate from each other communication codes of an ordinary communication and a test communication and use a communication code for a test communication and thereby test a path between LAN connecting devices.

And the present invention provides a system for performing maintenance between LAN connecting devices in which a plurality of LAN connecting devices connectable to a LAN are connected to each other through a circuit, said system comprising a means for recognizing, by using an alarm communication code being in a different form from an ordinary communication code, said alarm communication code separately from an ordinary LAN communication and for separating an ordinary communication and an alarm communication from each other on the basis of code data, and thereby said system performing an alarm transfer between said LAN connecting devices.

According to a system for performing a maintenance test between LAN connecting devices of the present invention, therefore, even a LAN connecting device not having a protocol up to layer 3 can separate from each other communication codes of an ordinary communication and an alarm information transfer for notifying a communication state and use the communication code for an alarm communication and thereby transfer alarm information for notifying a communication state between LAN connecting devices.

And the present invention provides a system for performing maintenance between LAN connecting devices in which a plurality of LAN connecting devices connectable to a LAN are connected to each other through a circuit, said system comprising a recognition means for recognizing a TYPE code of a test communication different from an ordinary LAN communication by utilizing a value not used in an ordinary LAN communication address or a length or a TYPE code not existing in a protocol between terminals of a physical communication or between terminals of a logical communication, and a separation means for separating an ordinary LAN communication and said test communication from each other, and said system securing a path between said LAN connecting devices by means of said test communication.

According to a system for performing a maintenance test between LAN connecting devices of the present invention, therefore, even a LAN connecting device not having a protocol up to layer 3 can separate from each other TYPE codes of an ordinary communication and a test communication and secure a path between LAN connecting devices by means of a test communication using a TYPE code for a test communication.

And the present invention provides a system for performing maintenance between LAN connecting devices in which a plurality of LAN connecting devices connectable to a LAN are connected to each other through a circuit, said system comprising a recognition means for recognizing a TYPE code of an alarm communication different from an ordinary LAN communication by utilizing a length or a TYPE code not existing in an ordinary LAN communication protocol between terminals of a physical communication or between terminals of a logical communication, and a separation means for separating an ordinary communication and said alarm communication from each other, and said system performing an alarm notification between said LAN connecting devices by means of said alarm communication.

According to a system for performing a maintenance test between LAN connecting devices of the present invention, therefore, even a LAN connecting device not having a protocol up to layer 3 can separate TYPE codes of an ordinary communication and an alarm communication from each other and use a TYPE code for an alarm communication and thereby transfer alarm information for notifying a communication state between LAN connecting devices.

And the present invention provides a system for performing maintenance between LAN connecting devices in which a plurality of LAN connecting devices connectable to a LAN are connected to each other through a circuit using a twisted pair cable as a physical medium, said system comprising a means for separating from each other the input/output speed of an ordinary communication and the input/output speed of a test communication between terminals of a physical communication or between terminals of a logical communication and performing a test communication at the same time as an ordinary communication or at an optional time, and said system performing a connection confirmation by means of a test communication at regular or irregular intervals.

According to a system for performing a maintenance test between LAN connecting devices of the present invention, therefore, even a LAN connecting device not having a protocol up to layer 3 can separate from each other the input/output speed of an ordinary communication and the input/output speed of a test communication and use a communication speed for a test communication and thereby perform a connection confirmation by a test communication at regular or irregular intervals.

And the present invention provides a system for performing maintenance between LAN connecting devices in which a plurality of LAN connecting devices connectable to a LAN are connected to each other through a circuit using a twisted pair cable as a physical medium, said system comprising a means for separating from each other the input/output speed of an ordinary communication speed and the input/output speed of an alarm communication speed between terminals of a physical communication or between terminals of a logical communication and performing an alarm communication at the same time as an ordinary communication or at an optional time, and said system performing an alarm notification by performing an alarm communication at regular or irregular intervals.

According to a system for performing a maintenance test between LAN connecting devices of the present invention, therefore, even a LAN connecting device not having a protocol up to layer 3 can separate from each other the input/output speed of an ordinary communication and the input/output speed of an alarm communication and use a communication speed for an alarm communication and thereby perform an alarm notification between LAN connecting devices at regular or irregular intervals.

And the present invention provides a system for maintenance between LAN connecting devices connected to a LAN, said system being provided with a test communication means for operating in parallel with an ordinary LAN communication independently of the said LAN communication and thereby monitoring an LAN communication signal and a test communication signal used in a test communication in a reception means for receiving communication information from a circuit and recognizing a test state by separating an ordinary communication state and a test communication state, and being provided with a means for transmitting and receiving said test signal, said system comprising the steps of; making a test-monitoring device transmit a test signal to a LAN connecting device to be a tested device, making said LAN connecting device transmit a test completion identifying response signal to said test signal to said test monitoring device, making said test monitoring device confirm the normality on the basis of the state of reception of this response signal, and thereby securing a communication operation between said LAN connecting devices.

According to a system for performing a maintenance test between LAN connecting devices of the present invention, therefore, since this system recognizes a test state by separating an ordinary communication state and a test communication state, makes a test monitoring device transmit a test signal to a LAN connecting device to be a tested device, makes said LAN connecting device transmit a test completion identifying response signal to said test signal to said test monitoring device, and makes said test monitoring device confirm the normality on the basis of the state of reception of this response signal, even a LAN connecting device not having a protocol up to layer 3 can secure a communication operation between LAN connecting devices.

And the present invention provides a LAN connecting device connectable to a LAN and connected to its opposite party device through a circuit using an optical fiber as a physical medium, said LAN connecting device comprising; a communication means for performing an ordinary LAN communication between terminals of a physical communication or between terminals of a logical communication, a test communication means for performing a test of communication, a separation means for separating from each other the input/output wavelength of said communication means and the input/output wavelength of said test communication means, and a test means for optionally performing a test of communication by means of said test communication means.

According to a LAN connecting device of the present invention, therefore, even a LAN connecting device not having a protocol up to layer 3 can separate from each other the input/output wavelength of an ordinary LAN communication and the input/output wavelength of a test communication for communication and use a wavelength of the test communication and thereby optionally perform a maintenance test for communication.

And the present invention provides a LAN connecting device connectable to a LAN and connected to its opposite party device through a circuit using an optical fiber as a physical medium, said LAN connecting device comprising a communication means for performing an ordinary LAN communication between terminals of a physical communication or between terminal of a logical communication, an alarm communication means for notifying an alarm state, and a separation means for separating from each other the input/output wavelength of said communication means and the input/output wavelength of said alarm communication means, and said LAN connecting device transferring alarm information with said opposite party device by means of said alarm communication means.

According to a LAN connecting device of the present invention, therefore, even a LAN connecting device not having a protocol up to layer 3 can separate from each other the input/output wavelength of an ordinary LAN communication and the input/output wavelength of an alarm communication for notifying an alarm state and use the wavelength of a maintenance communication and thereby transfer alarm information for notifying a communication state between itself and its opposite party device.

And the present invention provides a LAN connecting device connectable to a LAN and connected to its opposite party device through a circuit using an optical fiber as a physical medium, said LAN connecting device comprising a communication means for performing an ordinary LAN communication between terminals of a physical communication or between terminal of a logical communication, a status communication means for notifying a device status, and a separation means for separating from each other the input/output wavelength of said communication means and the input/output wavelength of said status communication means, and said LAN connecting device, when it comes into a power-off state, delivering a signal indicating the power-off state to said opposite party device by means of said status communication means.

According to a LAN connecting device of the present invention, therefore, even a LAN connecting device not having a protocol up to layer 3 can separate from each other the input/output wavelength of an ordinary LAN communication and the input/output wavelength of a status communication for a power-off state and use the wavelength of a power-off status communication and thereby deliver a signal indicating the power-off state to the opposite party device.

And the present invention provides a LAN connecting device connectable to a LAN and connected to its opposite party device through a circuit, said LAN connecting device comprising; a recognition means for recognizing a test communication code being in a different form from an ordinary LAN communication code, a separation means for separating an ordinary communication and a test communication from each other on the basis of code data when recognizing said test communication code by means of said recognition means, and a test means for testing a path to said opposite party device by means of said test communication code.

According to a LAN connecting device of the present invention, therefore, even a LAN connecting device not having a protocol up to layer 3 can separate from each other the communication codes of an ordinary communication and a test communication and use the communication code of a test communication and thereby test a path to its opposite party device.

And the present invention provides a LAN connecting device connectable to a LAN and connected to its opposite party device through a circuit, said LAN connecting device comprising; a recognition means for recognizing an alarm communication code being in a different form from an ordinary LAN communication code, a separation means for separating an ordinary communication and an alarm communication from each other on the basis of code data when recognizing said alarm communication code by means of said recognition means, and an alarm transfer means for alarm-transferring a device status to said opposite party device by means of said alarm communication code.

According to a LAN connecting device of the present invention, therefore, even a LAN connecting device not having a protocol up to layer 3 can separate from each other the communication codes between an ordinary communication and an alarm information transfer and use a communication code for an alarm communication and thereby transfer alarm information for notifying a communication state to its opposite party device.

And the present invention provides a LAN connecting device connectable to a LAN and connected to its opposite party device through a circuit, said LAN connecting device comprising; a recognition means for recognizing as a test communication code a value not used in an ordinary communication address or a length or a TYPE code not existing in a protocol between terminals of a physical communication or between terminals of a logical communication, and a separation means for separating an ordinary communication and said test communication from each other by means of said recognition means, and a test means for performing a test between itself and its opposite party device by means of said test communication at regular or irregular intervals.

According to a LAN connecting device of the present invention, therefore, even a LAN connecting device not having a protocol up to layer 3 can separate from each other TYPE codes of an ordinary communication and a test communication and use a TYPE code of a test communication and thereby perform a test between itself and its opposite party device.

And the present invention provides a LAN connecting device connectable to a LAN and connected to its opposite party device through a circuit, said LAN connecting device comprising; a recognition means for recognizing as an alarm communication code a length or a TYPE code not existing in an ordinary LAN communication protocol between terminals of a physical communication or between terminals of a logical communication, and a separation means for separating an ordinary communication and said alarm communication from each other by means of said recognition means, and an alarm notification means for notifying said opposite party device of a device status by means of said alarm communication.

According to a LAN connecting device of the present invention, therefore, even a LAN connecting device not having a protocol up to layer 3 can separate from each other TYPE codes of an ordinary communication and an alarm communication and use the TYPE code of an alarm communication and thereby transfer alarm information to notify a communication state to its opposite party device.

And the present invention provides a LAN connecting device connectable to a LAN and connected to its opposite party device through a circuit using a twisted pair cable as a physical medium, said LAN connecting device comprising a separation means for separating from each other the input/output speed of an ordinary communication and the input/output speed of a test communication between terminals of a physical communication or between terminals of a logical communication, and a test means for performing a test communication at the same time as an ordinary LAN communication or at an optional time, and said LAN connecting device performing a connection confirmation by means of a test communication at regular or irregular intervals.

According to a LAN connecting device of the present invention, therefore, even a LAN connecting device not having a protocol up to layer 3 can separate from each other the input/output speed of an ordinary communication and the input/output speed of a test communication and use the communication speed of a test communication and thereby perform a connection confirmation by a test communication at regular or irregular intervals.

And the present invention provides a LAN connecting device connectable to a LAN and connected to its opposite party device through a circuit using a twisted pair cable as a physical medium, said LAN connecting device comprising a separation means for separating from each other the input/output speed of an ordinary communication and the input/output speed of an alarm communication between terminals of a physical communication or between terminals of a logical communication, and an alarm communication means for performing an alarm communication at the same time as an ordinary communication or at an optional time, and said LAN connecting device notifying said opposite party device of a device status by means of an alarm communication.

According to a LAN connecting device of the present invention, therefore, even a LAN connecting device not having a protocol up to layer 3 can separate from each other the input/output speed of an ordinary communication and the input/output speed of an alarm communication and use the communication speed of an alarm communication and thereby notify its opposite party device of alarm information by means of an alarm communication at regular or irregular intervals.

As described above, a system for performing a maintenance test between LAN connecting devices and a LAN connecting device of the present invention enable even a LAN connecting device such as a bridge, switch, repeater or the like which can recognize only up to the OSI layer 2 to perform a loop test which has been able to be performed only by a remote device, for example, a router, and make it easy to locate a failure position at the time of installation or failure.

### BRIEF DESCRIPTION OF THE DRAWINGS

Figure 1 is a network composition diagram showing a system for performing a maintenance test between LAN connecting devices of the present invention and a state of using the same LAN connecting devices.
Figure 2 is a front view and a rear view showing the external appearance of a LAN connecting device shown in Figure 1.
Figure 3 is a block diagram showing the internal composition of a first embodiment of a LAN connecting device shown in Figure 1.
Figure 4 is a block diagram showing the internal composition of a communication data control portion shown in Figure 3.
Figure 5 is a block diagram showing the internal composition of a maintenance data control portion shown in Figure 3.
Figure 6 is a block diagram showing the internal composition of an MMI control portion shown in Figure 3.
Figure 7 is a block diagram showing the internal composition of a second embodiment of a LAN connecting device shown in Figure 1.
Figure 8 is a block diagram showing the internal composition of a third embodiment of a LAN connecting device shown in Figure 1.
Figure 9 is a diagram for explaining the notification of failure information in an embodiment of the present invention.
Figure 10 shows a frame format of the layer 2.
Figure 11 is a block diagram showing a maintenance data control portion showing another embodiment of a LAN connecting device shown in Figure 1.
Figure 12 is a linkage diagram in case that a plurality of LAN connecting devices is connected in series by a multistage cascade connection.
Figure 13 is a diagram for explaining a system of addition of an identification number used in a multistage cascade connection shown in Figure 12.

### BEST MODE FOR CARRYING OUT THE INVENTION

Embodiments of the present invention are described in detail with reference to the drawings in the following.

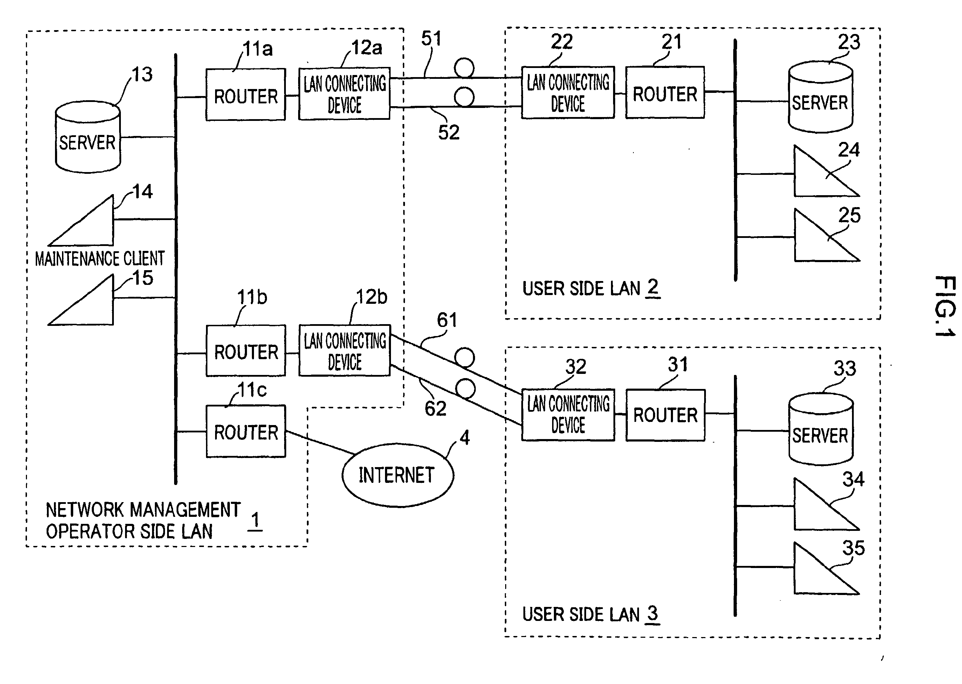

Figure 1 is a network composition diagram showing a system for performing a maintenance test between LAN connecting devices of the present invention and a state of using the same LAN connecting devices.

In Figure 1, this network is provided with a network management operator side LAN 1, a user side LAN 2, a user side LAN 3, the Internet 4, an upward circuit (circuit using an optical fiber as a physical medium: hereinafter referred to as "optical cable circuit") 51 and a downward optical cable circuit 52 which optical cable circuits connect the network management operator side LAN 1 and the user side LAN 2 to each other, and an upward optical cable circuit 61 and a downward optical cable circuit 62 which optical cable circuits connect the network management operator side LAN 1 and the user side LAN 3 to each other.

The network management operator side LAN 1 comprises a router 11a for routing the user side LAN 2, a LAN connecting device 12a which is connected to the router 11a and performs a LAN-to-LAN connection with the user side LAN 2, a LAN connecting device 12b which is connected to the router 11b and performs a LAN-to-LAN connection with the user side LAN 3, a router 11c for routing the Internet 4, a server 13, a maintenance client terminal 14 and a client terminal 15.

And the user side LAN 2 comprises a router 21 for routing the network management operator side LAN 1, a LAN connecting device 22 which is connected to the router 21 and performs a LAN-to-LAN connection with the network management operator side LAN 1, a server 23, client terminals 24 and 25.

And the user side LAN 3 comprises a router 31 for routing the network management operator side LAN 1, a LAN connecting device 32 which is connected to the router 31 and performs a LAN-to-LAN connection with the network management operator side LAN 1, a server 33, client terminals 34 and 35.

The LAN connecting devices 12a, 12b, 22 and 32 each are the same device, which has an interface converting function for converting an electric LAN interface using a twisted pair cable of 10 BASE-TX or 100 BASE-TX prescribed by IEEE 802.3 and an optical LAN interface using an optical cable of 100 BASE-TX prescribed by IEEE 802.3u to each other.

And the LAN connecting devices 12a and 22 are connected to each other by the optical cable circuits 51 and 52, and entirely in the same way the LAN connecting devices 12b and 32 are connected to each other by the optical cable circuits 61 and 62.

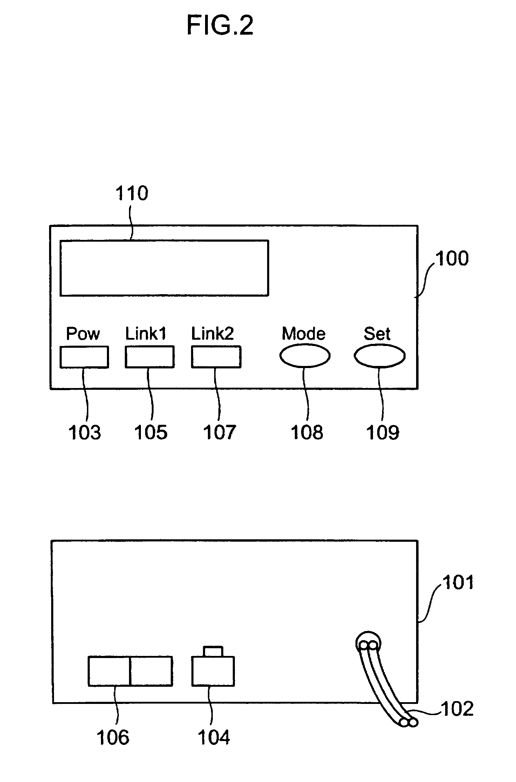

Figure 2 is a front view and a rear view showing the external appearance of each of LAN connecting devices 12a, 12b, 22 and 32 shown in Figure 1.

In Figure 2, a front panel 100 is provided with a power source LED 103 for indicating a power-on state, a LAN side status LED 105 for indicating a link state or a communication state in the LAN interface of 10 BASE-TX or 100 BASE-TX, a circuit side status LED 107 for indicating a link state or a communication state in the LAN interface of 100 BASE-TX, push buttons 108 and 109 for controlling by hand an operation of issuing a test signal, an operation of making a loop state and looping back a received signal, an operation of outputting a device status or information necessary for maintenance and the like, and a liquid crystal display (LCD) 110 for displaying various information such as setting information, status information and the like.

And the rear panel is provided with an AC power cable 102 for taking a commercial electric power, a connector 104 for the LAN interface of 10 BASE-TX or 100 BASE-TX and a connector 106 for the LAN interface of 100 BASE-TX.

In a conventional optical LAN standard, a single or a plurality of light wavelengths can be transmitted to or received from an optical cable circuit. In an optical LAN transmission/reception portion of the present invention, a plurality of wavelengths are separated according to the purpose of use, and a first wavelength is used for data of an ordinary LAN communication, a second wavelength is used for test data of a maintenance communication, a third wavelength or the same wavelength as said second wavelength is used for alarm data of a maintenance communication, and a fourth wavelength or the same wavelength as said second wavelength is used for maintenance operation data of a maintenance communication.

And maintenance can be performed by transmitting, passing, terminating and looping back data with said second wavelength, said third wavelength or said fourth wavelength used in a maintenance communication.

And in a conventional communication standard utilizing a twisted pair cable composed of electric LAN metallic wires, any of 10 BASE-TX and 100 BASE-TX can use the same physical cable. Hereupon, when transmission data of 10 BASE-TX are flowed in the same LAN, a receiver of 10 BASE-TX normally receives the data but a receiver of 100 BASE-TX judges the data as abnormal data.

And when transmission data of 100 BASE-TX are flowed in the same LAN, a receiver of 100 BASE-TX normally receives the data but a receiver of 10 BASE-TX judges the data as abnormal data. In such a way, a LAN is operated in general so that these do not exist in the same LAN.

Thereupon, an embodiment of the present invention is provided with a function for judging these two speeds at the same time, and judges at which speed some data are transmitted by making a receiver of 10 BASE-TX normally receive transmission data of 10 BASE-TX flowed in a LAN, making a receiver of 100 BASE-TX judge the data as abnormal data, making a receiver of 100 BASE-TX normally receive transmission data of 100 BASE-TX flowed in a LAN, and making a receiver of 10 BASE-TX judge the data as abnormal data.

That is to say, in case of an abnormal communication, both data of 10 BASE-TX and 100 BASE-TX are judged to be abnormal and it can be judged which speed is used in communication, and therefore one speed is used for data of an ordinary communication in the same way as a conventional way and the other speed is used for test data, alarm data and maintenance operation data of a maintenance communication. And maintenance can be performed by transmitting, passing, terminating and looping back data with the other speed.

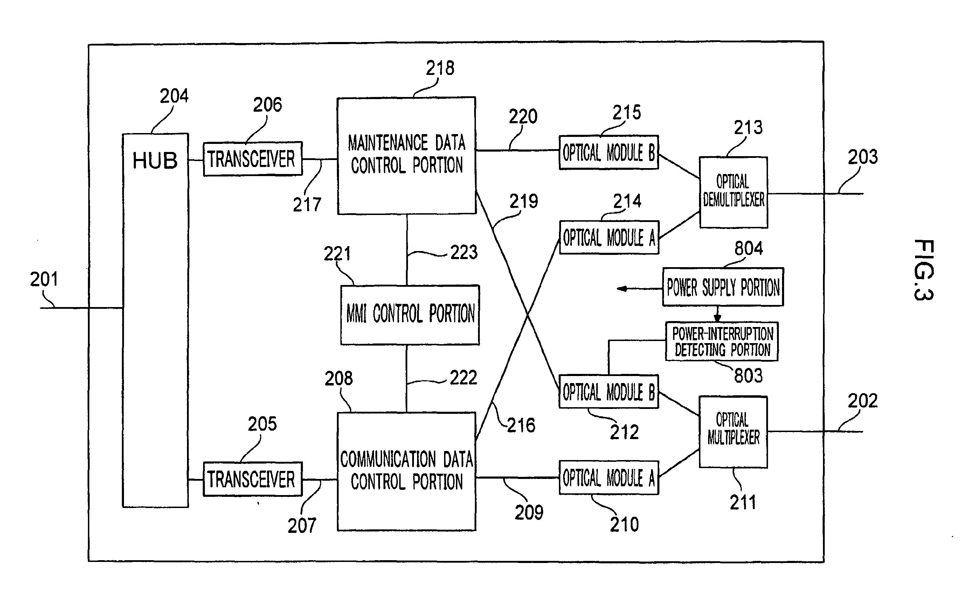

Figure 3 is a block diagram showing the internal composition of a first embodiment of each of LAN connecting devices 12a, 12b, 22 and 32 shown in Figure 1.

In Figure 3, each LAN connecting device is provided with, at the outside of it, an electric interface portion 201 with a twisted pair cable composed of metallic wires, and a transmission optical interface 202 and a reception optical interface 203 with optical cable circuits.

First, an ordinary data communication is described from the electric interface portion 201. In this device, 100 Mbps is set as an ordinary LAN data communication and 10 Mbps is set as a maintenance operation data communication. Signals inputted from the electric interface portion 201 enter a HUB block 204 used for branching in the inside and are collected into a transceiver 205 for determining a signal of 100 Mbps or a transceiver 206 for determining a signal of 10 Mbps.

A signal of 100 Mbps flows through a communication data bus 207 to a communication data control portion 208 and are processed as ordinary LAN communication data, and if circumstances require, are converted into frame data.

Next, data of an ordinary LAN data communication pass through a transmission communication data bus 209, are converted from an electric signal to an optical signal of 1300 nm in wavelength by an optical module A 210, are multiplexed with another wavelength from another optical module B 212 by an optical multiplexer 211, and are outputted to the optical interface portion 202 at the transmission side.

And input signals from the optical interface portion 203 are distributed through the optical demultiplexer 213 to an optical module A 214 as an optical signal of 1300 nm in wavelength and to an optical module B 215 as an optical signal of another wavelength. An optical signal is photoelectrically converted in the optical module A 214, flows through a reception communication data bus 216 to a communication data control portion 208, and are outputted through the communication data bus 207, the transceiver 205 and the HUB block 204 to the electric interface portion 201.

Next, a maintenance data communication is described from the electric interface portion 201.

Signals inputted from the electric interface portion 201 are distributed to the transceiver 206 for judging a signal of 10 Mbps in the inside from the HUB block 204. The signal of 10 Mbps flows through a maintenance data bus 217 to a maintenance data control portion 218 and are processed as maintenance data, and if circumstances require, are converted into frame data.

Next, the passing data of the maintenance data communication pass through a transmission maintenance data bus 219, are converted from an electric signal into an optical signal of 1550 nm in wavelength in an optical module B 212, are multiplexed with another wavelength from another optical module A 210 by the optical multiplexer 211, and are outputted to the optical interface portion 202.

And input signals from the optical interface portion 203 are distributed through the optical demultiplexer 213 to an optical module B 215 as an optical signal of 1550 nm in wavelength and to an optical module A 214 as an optical signal of another wavelength. An optical signal is converted into an electric signal in the optical module B 215, flows through a reception maintenance data bus 220 to the maintenance data control portion 218, and are outputted through the maintenance data bus 217, the transceiver 206 and the HUB block 204 to the electric interface portion 201.

Since a maintenance communication needs a loop-back function for a loop test and the like in addition to a replaying function, these functions are controlled by the maintenance data control portion 218. In case of an electric interface loop back, a signal inputted from the electric interface 201 passes through the HUB block 204, the transceiver 206 and the maintenance data bus 217, flows into the maintenance data control portion 218, and is judged to be a loop back signal, and then flows through the maintenance data bus 217, passes through the transceiver 206 and the HUB block 204, and is outputted to the electric interface portion 201.

Next, in case of an optical interface loop back, an optical signal inputted from the optical interface 203 passes through the optical demultiplexer 213 to become an optical signal of 1550 nm in wavelength and this optical signal passes through the optical module B 215 to become an electric signal and this electric signal flows into the maintenance data control portion 218 through the reception maintenance data bus 220, and is judged to be a loop-back signal, and then passes through the transmission maintenance data bus 219, is converted from an electric signal to an optical signal of 1550 nm in wavelength by the optical module B 212 and is multiplexed in the optical multiplexer 211 and is outputted to the transmission optical interface 202.

Next, the communication data control portion 208 is connected through an MMI control portion bus 222 to a man-machine interface (MMI) control portion 221 in order to make the man-machine interface easy. And in the same way as this, the maintenance data control portion 218 is connected through an MMI control portion bus 223 to a man-machine interface (MMI) control portion 221 in order to make the man-machine interface easy, and a manual operation controls the communication data control portion 208 and the maintenance data control portion 218.

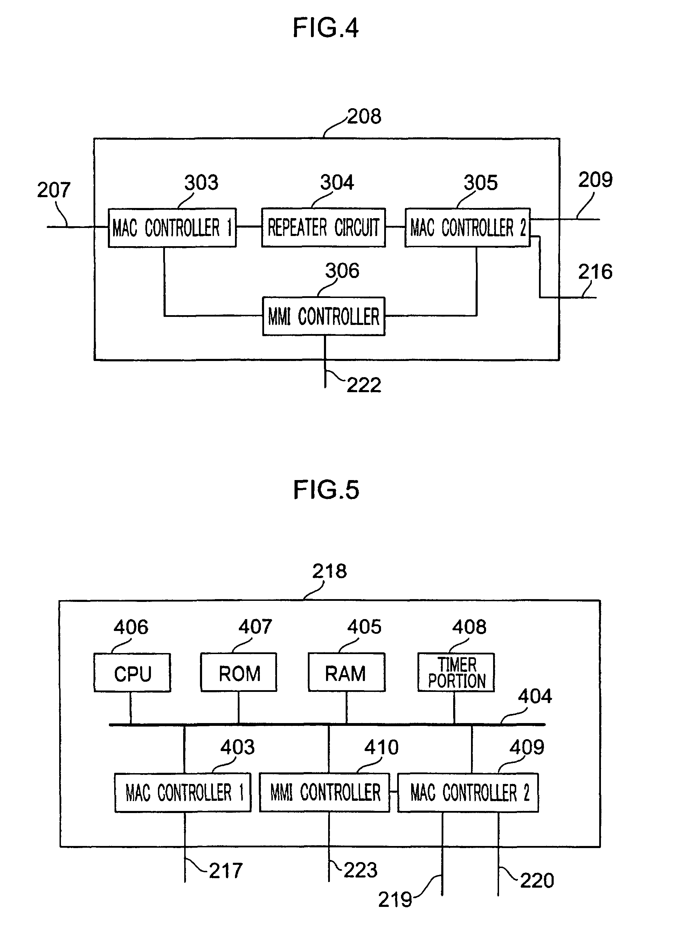

Figure 4 is a block diagram showing the internal composition of the communication data control portion shown in Figure 3.

In Figure 4, for the purpose of functioning as a repeater, the communication data control portion 208 of a LAN connecting device in the embodiment of the present invention receives one side LAN input data through the communication data bus 207 and receives the other side LAN input data through the reception communication data bus 216. And a signal received through the communication data bus 207 is judged for validity by an MAC controller (1) 303 and is delivered through a repeater circuit 304 to an MAC controller (2) 305 and transmitted to the transmission communication data bus 209.

Next, a signal received through the reception communication data bus 216 is judged for validity by the MAC controller (2) 305 and is delivered through the repeater circuit 304 to the MAC controller (1) 303 and transmitted to the communication data bus 207. The communication data bus 207 may be separated into a transmission data bus and a reception data bus.

Further, the communication data control portion 208 is provided with an MMI controller 306 for recognizing the status of the MAC controller (1) 303 or MAC controller (2) 305 and controlling communication with the MMI control portion 221 through the MMI control portion bus 222.

In a LAN connecting device according to the embodiment of the present invention, since the MAC controller (1) 303 and the MAC controller (2) 305 are used in order to properly judge the validity of a communication signal, such a composition is not always necessary. Therefore, the communication data control portion 208 can be implemented even by only the repeater circuit 304.

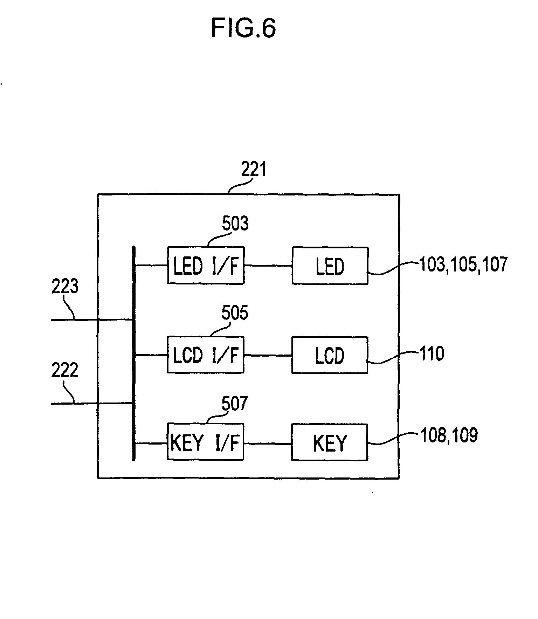

Figure 5 is a block diagram showing the internal composition of the maintenance data control portion 218 shown in Figure 3.

The maintenance data control portion 218 of a LAN connecting device in the embodiment of the present invention receives one side LAN input data through the maintenance data bus 217 and receives the other side LAN input data through the reception maintenance data bus 220, and a signal received through the maintenance data bus 217 is judged for validity by an MAC controller (1) 403 and is temporarily stored into a RAM 405 through an internal bus 404.

The MAC controller (1) 403 stores temporarily the signal into the RAM 405, namely, finishes reception of the signal and at the same time, notifies by interruption a CPU 406 of the completion of reception, and makes a control program recognize this fact. A ROM 407 is a storage for storing the control program in it, and a timer portion 408 is a timer circuit for time-stamping a maintenance time or the like by the control program.

And a signal received through the reception maintenance data bus 220 is judged for validity by the MAC controller (2) 409 and is temporarily stored in the RAM 405 through the internal bus 404. The MAC controller (2) 409 stores temporarily the signal into the RAM 405, namely, finishes reception of the signal and at the same time, notifies by interruption the CPU 406 of the completion of reception, and makes the control program recognize this interruption and reception. Additionally to these, the maintenance data control portion 218 is provided with an MMI controller 410 for controlling the state of each function or controlling communication with the MMI control portion 221 through the MMI control bus 223. The maintenance data bus 217 may be separated into a transmission data bus and a reception data bus.

In this embodiment of the present invention, all data to be transmitted and received are commands for maintenance, and for example, a loop test of a LAN connecting device is recognized from data of a frame and a loop back process is performed, or a loop test of the far side device of transit is recognized and a relay operation is judged and processed. In case that a loop back process is judged, if the data have been received from the MAC controller (1) 403, the data are processed according to need and are transmitted to the MAC controller (1) 403.And if the data have been received from the MAC controller (2) 409, the data are processed according to need and are transmitted to the MAC controller (2) 409. And in case that a relaying process is judged, if the data have been received from the MAC controller (1) 403, the data are processed according to need and are transmitted to the MAC controller (2) 409. And if the data have been received from the MAC controller (2) 409, the data are processed according to need and are transmitted to the MAC controller (1) 403.

Figure 6 is a block diagram showing the internal composition of the MMI control portion 221 shown in Figure 3.

The MMI control portion 221 of a LAN connecting device in the embodiment of the present invention is connected through the MMI control portion bus 222 to the communication data control portion 208 and is connected through the MMI control bus 223 to the maintenance data control portion 218. LED's 103, 105 and 107 provided on the front panel are controlled by an LED I/F control portion 503 and thereby the indication control of turning on, blinking or turning off the LED's is performed. And the LCD 110 provided on the front panel is controlled by an LCD I/F control portion 505, and the display control of a device status, a setting status or the like is performed. And an input operation by hand is read by a key I/F control portion 507 when a key 108 or 109 provided on the display panel is pressed, and makes it possible to perform, for example, transmission of loop data being one of maintenance operations to the maintenance data control portion 218.

According to the LAN connecting devices shown in Figures 3 to 6, by modifying the specifications of the interface at the LAN side and the specifications of the interface at the communication circuit side of the communication data control portion 208 and the maintenance data control portion 218, the combination of an electric interface and an optical interface can be replaced with the combination of an optical interface and an optical interface, or an electric interface and an electric interface, or further these interfaces can be multiplexed by increasing the number of physical ports.

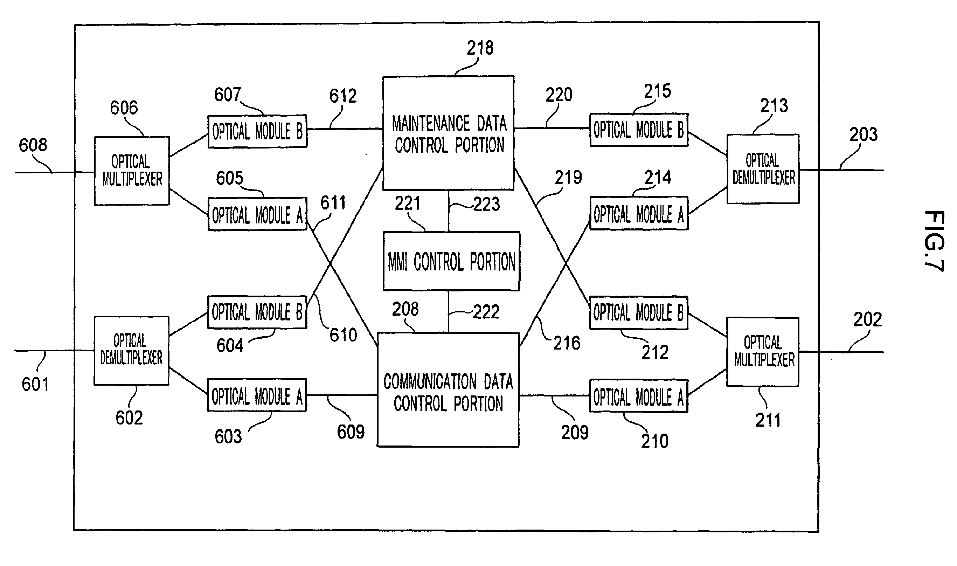

Figure 7 is a block diagram showing the internal composition of a second embodiment of each of LAN connecting devices 12a, 12b, 22 and 32 shown in Figure 1. In Figure 7, the LAN connecting device adopts an optical interface as the LAN side interface specifications differently from the LAN connecting device of Figure 3, and since the composition and function other than this point are the same as the device of Figure 3, the different point in composition is described in the following.

An optical signal inputted from the LAN side flows through an optical interface portion 601 to an optical demultiplexer 602 and this optical demultiplexer 602 distributes an optical signal of 1300 nm in wavelength to an optical module A 603 and distributes another optical signal of 1550 nm in wavelength to an optical module B 604.

The optical module A 603 converts the optical signal to an electric signal and sends this electric signal to the communication data control portion 208 through a transmission communication data bus 609, and in the same way the optical module B 604 converts the optical signal to an electric signal and sends this electric signal to the maintenance data control portion 218 through a transmission maintenance data bus 610.

And for an optical signal to be outputted to the LAN side, an electric signal from the communication data control portion 208 is delivered to an optical module A 605 through the reception communication data bus 611, and is converted from the electric signal to an optical signal by the optical module A 605 and is delivered to an optical multiplexer 606, and in the same way an electric signal from the maintenance data control portion 218 is delivered to an optical module B 607 through the reception maintenance data bus 612, and is converted from the electric signal to an optical signal by the optical module B 607 and is delivered to an optical multiplexer 606, and the optical signal from the optical module A 605 and the optical signal from the optical module B 607 are multiplexed and outputted by the optical multiplexer 606.

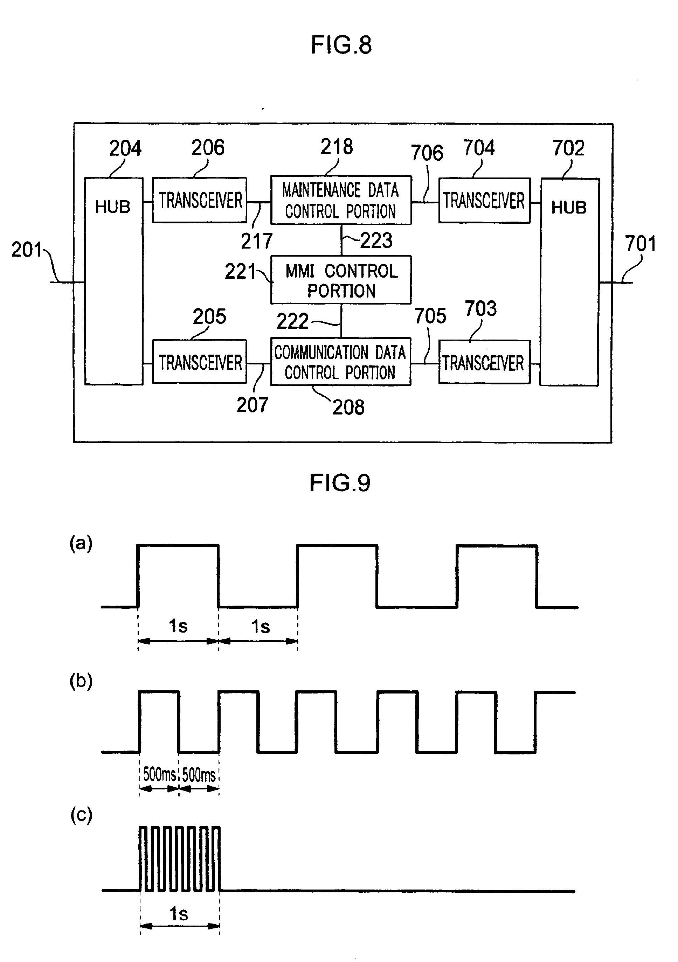

Figure 8 is a block diagram showing the internal composition of a third embodiment of each of LAN connecting devices 12a, 12b, 22 and 32 shown in Figure 1. In Figure 8, the LAN connecting device adopts an electric interface as the circuit side interface specifications differently from the LAN connecting device of Figure 3, and since the composition and function other than this point are the same as the device of Figure 3, the different point in composition is described in the following.

An electric signal inputted from the circuit side flows through an electric interface portion 701 to a HUB block 702 and is received by a transceiver 703 recognizing an electric signal of 100 Mbps and a transceiver 704 recognizing an electric signal of 10 Mbps, and is transmitted to and received from the communication data control portion 208 by transceiver 703 through the communication data bus 705, and is transmitted to and received from the maintenance data control portion 218 by transceiver 704 through the maintenance data bus 706.

Next, in an electric interface, maintenance of a network can be performed not only by using different speeds in a LAN communication and a maintenance, communication but also by using different coding systems at the same speed. MAC controllers shown in Figures 4 and 5 use the respective coding systems prescribed in IEEE 802.3 according to their applications. For example, in 100 BASE-TX, a coding system by an NRZ (Non-Return to Zero) method is adopted, and using another code different from this code makes it impossible to communicate with an ordinary LAN connecting device and causes a CRC error and the like in an ordinary LAN connecting device. Therefore, by using a coding system, for example, by means of an NRZI (Non-Return to Zero Inversion) method other than the 100 BASE-TX standard of IEEE 802.3, it is possible to easily perform a specific communication with a specific device not capable of communicating with an ordinary LAN connecting device.

Hereupon, it is possible to communicate with a plurality of systems by using a coding system of the IEEE 802.3 Standard in the communication data control portion 208 of an ordinary LAN connecting device and another coding system different from the IEEE 802.3 Standard in the maintenance data control portion 218.

Therefore, for example, it is possible to use the communication using a first coding system prescribed in the IEEE 802.3 Standard for an ordinary LAN data communication and use the communication using a second coding system different from the first coding system for test in a maintenance data communication.

Further, it is possible to perform maintenance of a LAN device by using a third coding system different from the second coding system for alarm in a maintenance data communication and a fourth coding system different from the third coding system for operation in a maintenance data communication, and transmitting, passing, terminating or looping back the maintenance data.

Next, a system for notifying the opposite party LAN connecting device of failure information is described.

In an optical interface, an idle signal to be sent in case of no communication is set and usually, data of "1" are successively flowing. Therefore, by monitoring this idle signal using this system, it is possible to monitor a failure in the opposite party LAN connecting device.

For example, since successive "1"s are used as an idle signal, when the signal of successive "1"s is interrupted it can be judged that the opposite party LAN connecting device is stopped. However, since the cause of stop includes a failure in the LAN connecting device main body, a circuit failure, a stoppage of power supply and the like, the cause of stop cannot be identified even if a LAN connecting device recognizes the interruption of a signal of successive "1"s.

Figure 9 is a diagram for explaining the notification of failure information in an embodiment of the present invention. Symbol (a) in Figure 9 shows a signal issued when a failure occurs in a LAN connecting device main body, which notifies its opposite party LAN connecting device that a failure has occurred in this side LAN connecting device main body by repeatedly and alternately sending "1" and "0" at intervals of one second. And symbol (b) in Figure 9 shows a signal issued when a LAN connecting device can obtain no signal from the reception line at the circuit side and therefore judges that a circuit failure has occurred, and the LAN connecting device notifies its opposite party LAN connecting device that a failure has occurred in the circuit by repeatedly and alternately sending "1" and "0" at intervals of 500 milliseconds.

Further, symbol (c) in Figure 9 shows a signal issued when a LAN connecting device has recognized a stoppage of power supply, and the LAN connecting device repeatedly sends "1" and "0" at seven times for about one second. In Figure 3, a LAN connecting device is provided with a power supply portion 804 for supplying power from a commercial power source to the LAN connecting device and when the power supply from this power supply portion 804 is interrupted, a power-interruption detecting portion 803 sends a signal indicating that this power supply is interrupted to the optical module B 212. The optical module B 212 is made so as to output an optical signal to the optical interface portion 203 according to reception of data transmitted from the data control portion 218 and input of a signal from the power-interruption detecting portion 803, and sends various failure signals shown in Figure 9 to the opposite party LAN connecting device. The power supply portion 804 is provided with an electrolytic capacitor having a large capacity, and can send optical signals from the optical module B 212 for a certain period (for about one second) even if the power supply of a commercial power source is interrupted.

Thanks to this, even if a frame being under processing has a maximum of 1518 octets in an Ethernet LAN communication, the last processing time is ended in about 12 ms in case of a transmission rate of 100 Mbps and it is possible to send signals to the opposite party LAN connecting device for a certain remaining period of about 990 ms. The opposite party LAN connecting device has a failure signal analyzing means for receiving and analyzing this signal in the optical module B 215 and can recognize a state and the like of the opposite party.

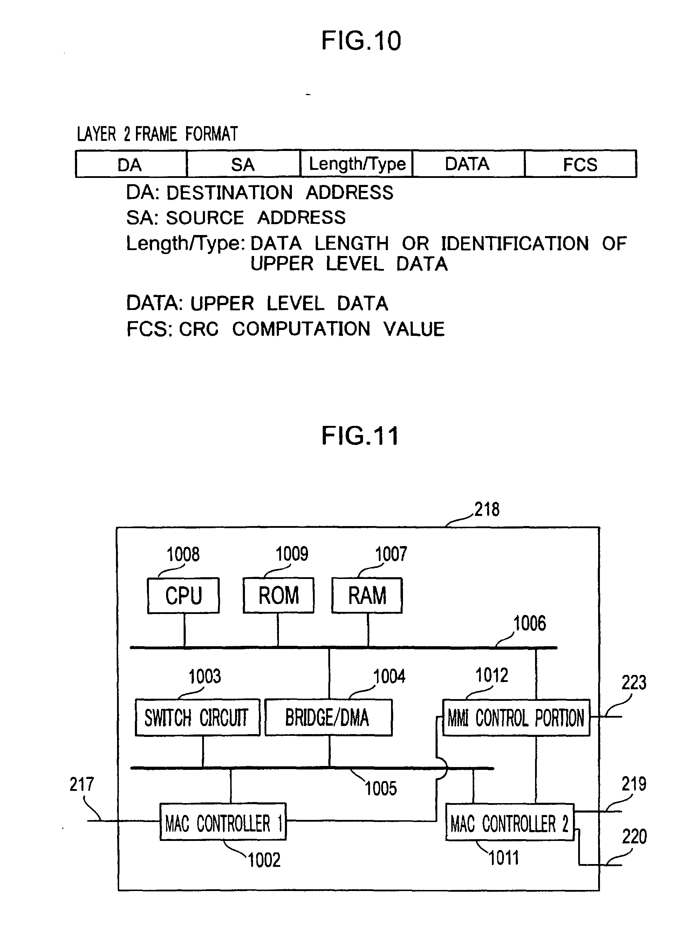

Figure 10 shows the layer 2 frame format, whose composition and elements are prescribed by the IEEE 802.3. The layer 2 frame format can separate as a key an ordinary LAN data communication and a maintenance data communication by utilizing a frame flowing through a LAN in a bridge level, and by utilizing this it is possible to realize a function such as a loop back function and the like.

An example of such an operation is described with reference to Figure 11 in the following. Figure 11 is a block diagram of a maintenance data control portion 218, which uses a switch circuit, showing another embodiment of a LAN connecting device of the present invention shown in Figure 1.

An MAC controller (1) 1002 judges for validity a signal received from the maintenance data bus 217 as LAN input data, and a switch circuit 1003 judges which port the data correspond to. At this time, in case that the Destination Address is a device specific value or a value of, for example, "02:02:00:00:00:00" determined in advance for maintenance, or in case that the Length/Type value is a value of, for example, "32" or "FFFE (HEX)" not existing in the IEEE 802.3 Standard, or a value determined in advance between maintenance devices, or in case that the Destination Address and the Source Address have the same value, the data are recognized as maintenance data. And in case that for example a loop test of the LAN connecting device is recognized from the data of a frame, a loop back test is performed, and in case that a loop test of the destination of transit is recognized, a relaying operation is judged and processed.

The flow of data for maintenance is directly judged by the switch circuit 1003, and additionally to this, data flowing along a bridge bus 1005 are stored through a bridge/DMA 1004 and an internal bus 1006 into a RAM 1007, and a CPU is notified of the fact by interruption. Then a control program stored in a ROM 1009 and executed by the CPU 1008 analyzes the upper level data, realizes a maintenance function and generates loop back data or new alarm data.

A maintenance function capable of being operated by the switch circuit 1003 is a loop function of looping back and transmitting received data without processing them.

Next, in case that the control program judges data as loop-back data, if the data have been received from the MAC controller (1) 1002, the data are processed according to need and are once passed through the switch circuit 1003 from the bridge/DMA 1004 and transmitted to the MAC controller (1) 1002. And in case that the data are a frame inputted from the bus 219 or 220, the data are judged for validity by the MAC controller (2) 1011, are stored through the switch circuit 1003 and the bridge/DM 1004 into a RAM 1007, and are processed by the control program according to need and are once passed through the switch circuit 1003 from the bridge/DMA 1004 and transmitted to the MAC controller (2) 1011. In case that the control program judges the data as transit data, the control program sends the data to the switch circuit 1003 by the same procedure, and the switch circuit 1003 identifies the transit side MAC controller and sends the data to this MAC controller.

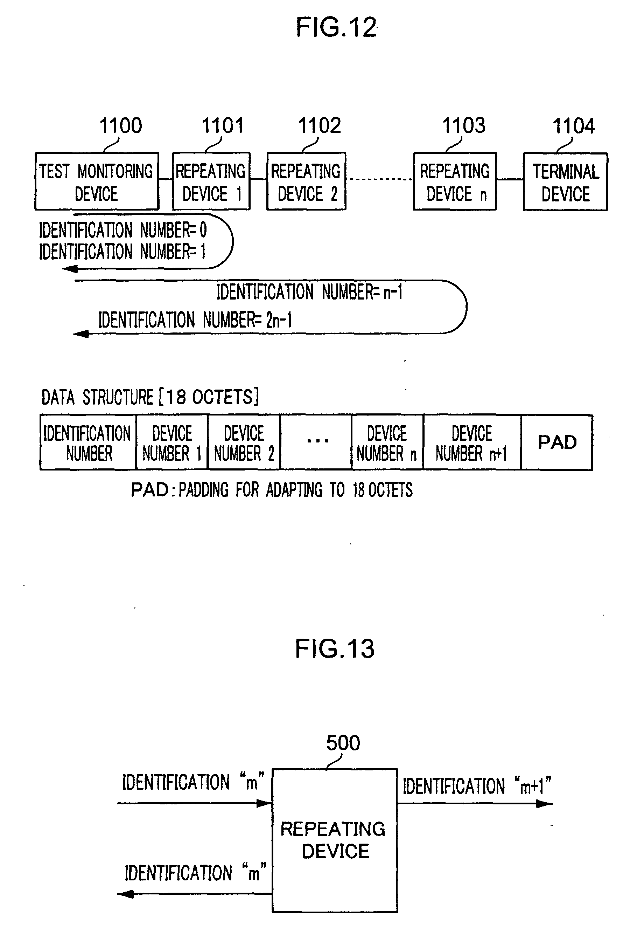

Figure 12 is a linkage diagram in case that a plurality of LAN connecting devices are connected in series by a multistage cascade connection.

For example, a LAN connecting device can be set as an originating device by a button on its front face shown in Figure 2, and in Figure 12 a LAN connecting device described as a test monitoring device 1100 is an originating device. And LAN connecting devices described as repeating devices 1101, 1102 and 1103 are repeating devices, and a LAN connecting device described as a terminal device 1104 is a terminal device.

A test function using the layer 2 frame format adds +1 to the "identification number" of data each time the data pass through a repeating device, for example, as shown in Figure 13, and thereby, can know at what number position a device is placed in order by means of a computing expression of "("identification number" + 1)/2". In this case, it is possible to judge the total number of repeating devices by transmitting the loop-back data for each relaying. And at this time, by adding a device-specific device number to the data additionally to "identification number", it is possible to suppress the increase of traffic caused by erroneously looping back the loop-back data. Concretely, by using a logic which confirms all the device numbers received and, in case that the device number of the relevant device is the same as any of the received device numbers, relays the data but does not loop back the data, it is possible to perform maintenance in case of such a multistage connection.

According to this embodiment, it is possible to obtain an effect that for example a loop test can be also performed on a remote LAN connecting device not having a protocol up to the OSI layer 3 and this method can be utilized for identifying the location of failure when some equipment is installed or when a failure occurs.

Therefore, it is possible to confirm the separation between the scope managed by a user and the scope managed by a network management operator without using a router and easily grasp the separation point for a failure.

### UTILIZABILITY IN INDUSTRY

As described above, a system for performing a maintenance test between LAN connecting devices and a LAN connecting device of the present invention make it possible to perform, for example, a loop test even on a remote LAN connecting device not having a protocol up to the OSI layer 3 and be utilized for identifying the location of failure when some equipment is installed or when a failure occurs, and as the result, confirm the separation between the scope managed by a user and the scope managed by a network management operator without using a router and easily grasp the separation point for a failure.

## Claims

1. A system for performing maintenance between LAN connecting devices in which a plurality of LAN connecting devices connectable to a LAN are connected to each other through a circuit using an optical fiber as a physical medium,
said system comprising a test means which separates from each other the input/output wavelength of a communication means for performing an ordinary LAN communication between terminals of a physical communication or between terminals of a logical communication and the input/output wavelength of a test communication means for performing a test of communication, and
said system performing a maintenance test on a path between said LAN connecting devices.

2. A system for performing maintenance between LAN connecting devices in which a plurality of LAN connecting devices connectable to a LAN are connected to each other through a circuit using an optical fiber as a physical medium, said system comprising the steps of;
separating from each other the input/output wavelength of a communication means for performing an ordinary LAN communication between terminals of a physical communication or between terminals of a logical communication and the input/output wavelength of an alarm communication means for notifying a communication state, and
transferring alarm information between said LAN connecting devices by means of said alarm communication means.

3. A system for performing maintenance between LAN connecting devices in which a plurality of LAN connecting devices connectable to a LAN are connected to each other through a circuit using an optical fiber as a physical medium, said system comprising the steps of;
separating from each other the input/output wavelength of a communication means for performing an ordinary LAN communication between terminals of a physical communication or between terminals of a logical communication and the input/output wavelength of a status communication means for notifying a device status, and
delivering, when one side LAN connecting device comes into a power-off state, a signal indicating the power-off state to the other side LAN connecting device by means of said status communication means of the said LAN connecting device being in the power-off state.

4. A system for performing maintenance between LAN connecting devices in which a plurality of LAN connecting devices connectable to a LAN are connected to each other through a circuit,
said system comprising a means for recognizing, by using a test communication code being in a different form from an ordinary LAN communication code, said test communication code separately from an ordinary LAN communication and for separating an ordinary communication and a test communication from each other on the basis of code data, and thereby
said system testing a path between said LAN connecting devices.

5. A system for performing maintenance between LAN connecting devices in which a plurality of LAN connecting devices connectable to a LAN are connected to each other through a circuit,
said system comprising a means for recognizing, by using an alarm communication code being in a different form from an ordinary LAN communication code, said alarm communication code separately from an ordinary LAN communication and for separating an ordinary communication and an alarm communication from each other on the basis of code data, and thereby
said system performing an alarm transfer between said LAN connecting devices.

6. A system for performing maintenance between LAN connecting devices in which a plurality of LAN connecting devices connectable to a LAN are connected to each other through a circuit,
said system comprising a recognition means for recognizing a TYPE code of a test communication different from an ordinary LAN communication by utilizing a value not used in an ordinary LAN communication address or a length or a TYPE code not existing in a protocol between terminals of a physical communication or between terminals of a logical communication, and a separation means for separating an ordinary LAN communication and said test communication from each other, and
said system securing a path between said LAN connecting devices by means of said test communication.

7. A system for performing maintenance between LAN connecting devices in which a plurality of LAN connecting devices connectable to a LAN are connected to each other through a circuit,
said system comprising a recognition means for recognizing a TYPE code of an alarm communication different from an ordinary LAN communication by utilizing a length or a TYPE code not existing in an ordinary LAN communication protocol between terminals of a physical communication or between terminals of a logical communication, and a separation means for separating an ordinary communication and said alarm communication from each other, and
said system performing an alarm notification between said LAN connecting devices by means of said alarm communication.

8. A system for performing maintenance between LAN connecting devices in which a plurality of LAN connecting devices connectable to a LAN are connected to each other through a circuit using a twisted pair cable as a physical medium,
said system comprising a means for separating from each other the input/output speed of an ordinary communication and the input/output speed of a test communication between terminals of a physical communication or between terminals of a logical communication and performing a test communication at the same time as an ordinary communication or at an optional time, and
said system performing a connection confirmation by means of a test communication at regular or irregular intervals.

9. A system for performing maintenance between LAN connecting devices in which a plurality of LAN connecting devices connectable to a LAN are connected to each other through a circuit using a twisted pair cable as a physical medium,
said system comprising a means for separating from each other the input/output speed of an ordinary communication and the input/output speed of an alarm communication between terminals of a physical communication or between terminals of a logical communication and performing an alarm communication at the same time as an ordinary communication or at an optional time, and
said system performing an alarm notification by performing an alarm communication at regular or irregular intervals.

10. A system for performing maintenance between LAN connecting devices connected to a LAN,
said system being provided with a test communication means for operating in parallel with an ordinary LAN communication independently of the said LAN communication and thereby monitoring an ordinary LAN communication signal and a test communication signal used in a test communication in a reception means for receiving communication information from a circuit and recognizing a test state by separating an ordinary communication state and a test communication state, and being provided with a means for transmitting and receiving said test signal,
said system comprising the steps of;
making a test monitoring device transmit a test signal to a LAN connecting device to be a tested device,
making said LAN connecting device transmit a test completion identifying response signal to said test signal to said test monitoring device and
making said test monitoring device confirm the normality on the basis of the state of reception of this response signal, and thereby
securing a communication operation between said LAN connecting devices.

11. A LAN connecting device connectable to a LAN and connected to its opposite party device through a circuit using an optical fiber as a physical medium, said LAN connecting device comprising;
a communication means for performing an ordinary LAN communication between terminals of a physical communication or between terminals of a logical communication,
a test communication means for performing a test of communication,
a separation means for separating from each other the input/output wavelength of said communication means and the input/output wavelength of said test communication means, and
a test means for optionally performing a test of communication by means of said test communication means.

12. A LAN connecting device connectable to a LAN and connected to its opposite party device through a circuit using an optical fiber as a physical medium, said LAN connecting device comprising a communication means for performing an ordinary LAN communication between terminals of a physical communication or between terminals of a logical communication, an alarm communication means for notifying an alarm state, and a separation means for separating from each other the input/output wavelength of said communication means and the input/output wavelength of said alarm communication means, and
said LAN connecting device transferring alarm information with said opposite party device by means of said alarm communication means.

13. A LAN connecting device connectable to a LAN and connected to its opposite party device through a circuit using an optical fiber as a physical medium, said LAN connecting device comprising a communication means for performing an ordinary LAN communication between terminals of a physical communication or between terminals of a logical communication, a status communication means for notifying a device status, and a separation means for separating from each other the input/output wavelength of said communication means and the input/output wavelength of said status communication means, and
said LAN connecting device, when it comes into a power-off state, delivering a signal indicating the power-off state to said opposite party device by means of said status communication means.

14. A LAN connecting device connectable to a LAN and connected to its opposite party device through a circuit, said LAN connecting device comprising;
a recognition means for recognizing a test communication code being in a different form from an ordinary LAN communication code,
a separation means for separating an ordinary communication and a test communication from each other on the basis of code data when recognizing said test communication code by means of said recognition means, and
a test means for testing a path to said opposite party device by means of said test communication code.

15. A LAN connecting device connectable to a LAN and connected to its opposite party device through a circuit, said LAN connecting device comprising;
a recognition means for recognizing an alarm communication code being in a different form from an ordinary LAN communication code,
a separation means for separating an ordinary communication and an alarm communication from each other on the basis of code data when recognizing said alarm communication code by means of said recognition means, and
an alarm transfer means for alarm-transferring a device status to said opposite party device by means of said alarm communication code.

16. A LAN connecting device connectable to a LAN and connected to its opposite party device through a circuit, said LAN connecting device comprising;
a recognition means for recognizing as a test communication code a value not used in an ordinary communication address or a length or a TYPE code not existing in a protocol between terminals of a physical communication or between terminals of a logical communication,
a separation means for separating an ordinary communication and said test communication from each other by means of said recognition means, and
a test means for performing a test between itself and its opposite party device by means of said test communication at regular or irregular intervals.

17. A LAN connecting device connectable to a LAN and connected to its opposite party device through a circuit, said LAN connecting device comprising;
a recognition means for recognizing as an alarm communication code a length or a TYPE code not existing in an ordinary LAN communication protocol between terminals of a physical communication or between terminals of a logical communication,
a separation means for separating an ordinary communication and said alarm communication from each other by means of said recognition means, and
an alarm notification means for notifying said opposite party device of a device status by means of said alarm communication.

18. A LAN connecting device connectable to a LAN and connected to its opposite party device through a circuit using a twisted pair cable as a physical medium, said LAN connecting device comprising a separation means for separating from each other the input/output speed of an ordinary communication and the input/output speed of a test communication between terminals of a physical communication or between terminals of a logical communication, and a test means for performing a test communication at the same time as an ordinary LAN communication or at an optional time, and
said LAN connecting device performing a connection confirmation by means of a test communication at regular or irregular intervals.

19. A LAN connecting device connectable to a LAN and connected to its opposite party device through a circuit using a twisted pair cable as a physical medium, said LAN connecting device comprising a separation means for separating from each other the input/output speed of an ordinary communication and the input/output speed of an alarm communication between terminals of a physical communication or between terminals of a logical communication, and an alarm communication means for performing an alarm communication at the same time as an ordinary communication or at an optional time, and
said LAN connecting device notifying its opposite party device of a device status by means of an alarm communication.
